# DEMANDE DE BREVET EUROPEEN

(11) **EP 4 438 449 A1**
(43) Date de publication de la demande: **02.10.2024**
(21) Numéro de dépôt: 23189852.9
(22) Date de dépôt: 04.08.2023
(51) Int. Cl.: B62H 3/10

(54) **DISPOSITIF DE STATIONNEMENT POUR VÉHICULE À PLATEFORME TEL QU' UNE TROTTINETTE OU UN SCOOTER**

(30) Priorité: 31.03.2023 FR 2303224
(71) Demandeur: Bietrix, Robert, 34540 Balaruc-Le-Vieux (FR)
(72) Inventeur: Bietrix, Robert, 34540 Balaruc-Le-Vieux (FR)
(74) Mandataire: Tzeuton Tchangoum, Eric Olivier

(57) **Abrégé**

L'invention concerne un dispositif de stationnement pour au moins un véhicule comprenant des roues et une plaque repose pied (R) disposée entre les roues, comprenant :
- une plaque support (S) pour la plaque repose pied (R), en laissant un espace pour les roues ; et
- un bras de maintien (M1 ; M2 ; M3) recouvrant la plaque repose pied (R), caractérisé en ce que la plaque support (S) et le bras de maintien (M1 ; M2 ; M3) comprennent des pièces de fixation (F1, F2, O, E) coopérant avec un moyen de verrouillage du bras de maintien (M1 ; M2 ; M3) sur la plaque support (5), et en ce que le bras de maintien est choisi parmi une chaîne (M1), une plaque à charnière (M2) ; une plaque à charnière emboutie de manière rectangulaire (M3).

## Description

L'invention concerne le domaine d'un appareillage destiné à recevoir des engins à deux roues afin de les sécuriser, contre le vol ou toute dégradation et vandalisme. Ledit appareillage, sera considéré comme un mobilier urbain qui a pour but d'être destiné à un parking anti vol pour engins à deux roues.

Il s'agit plus généralement, de systèmes et dispositifs de mobilier urbain pour le stationnement de véhicules à deux roues comportant une plaque repose pieds (ou plateforme repose pieds) entre les roues, tels que les trottinettes et certains scooters.

Il peut être mis à disposition pour une prestation de service, pour une clientèle commerciale ou de passage, il peut être fixé au sol ou rentré le soir, à la fermeture du commerce l'exploitant.

Ce mobilier urbain destiné au parking sécurisé pour trottinette et deux roues. L'art antérieur comporte des solutions de mobilier urbain avec des anneaux en hauteur recevant un antivol. Ces solutions sont adaptées aux bicyclettes, mais ne sont pas adaptées aux trottinettes.

Un objectif de l'invention est de proposer une solution de stationnement et verrouillage compatible avec notamment des trottinettes de plusieurs tailles.

Pour atteindre cet objectif, l'invention propose un dispositif de stationnement selon la revendication indépendante.

En particulier, le dispositif de stationnement comprend une plaque support sur laquelle repose la plaque repose pied, en laissant un espace pour les roues de part et d'autre de la plaque support.

Le dispositif de stationnement comprend en outre un bras de maintien recouvrant des côtés latéraux et le dessus de la plaque repose pied.

Selon l'invention, la plaque support et le bras de maintien comprennent des pièces de fixation coopérant ensemble, et avec un moyen de verrouillage pour verrouiller le bras de maintien sur la plaque support. Le moyen de verrouillage comprend un antivol et/ou un cadenas.

De préférence, le bras de maintien est choisi parmi une chaîne, une plaque à charnière équipée d'un oeillet ou d'un anneau ; un bras ou une plaque à charnière emboutie de manière rectangulaire ou carrée équipée d'un oeillet ou d'un anneau. Avantageusement, cet agencement est pleinement adapté aux trottinettes et scooters en surélevant le dessus de la plaque support par rapport au sol.

Selon d'autres variantes, l'invention concerne en outre un dispositif de stationnement selon chacune des revendications dépendantes.

L'invention sera maintenant décrite sur la base des figures annexées dans lesquelles :
- la figure 1 représente une vue dans l'espace tronquée d'un dispositif de stationnement selon un premier mode de réalisation ;
- la figure 2 représente une vue dans l'espace tronquée d'un dispositif de stationnement selon un deuxième mode de réalisation ;
- la figure 3 représente une vue dans l'espace d'une plaque support d'un dispositif de stationnement selon un troisième mode de réalisation ;
- la figure 4 représente une vue dans l'espace du dispositif de stationnement selon le troisième mode de réalisation ; et
- la figure 5 représente une vue de côté du dispositif de stationnement de la figure précédente.

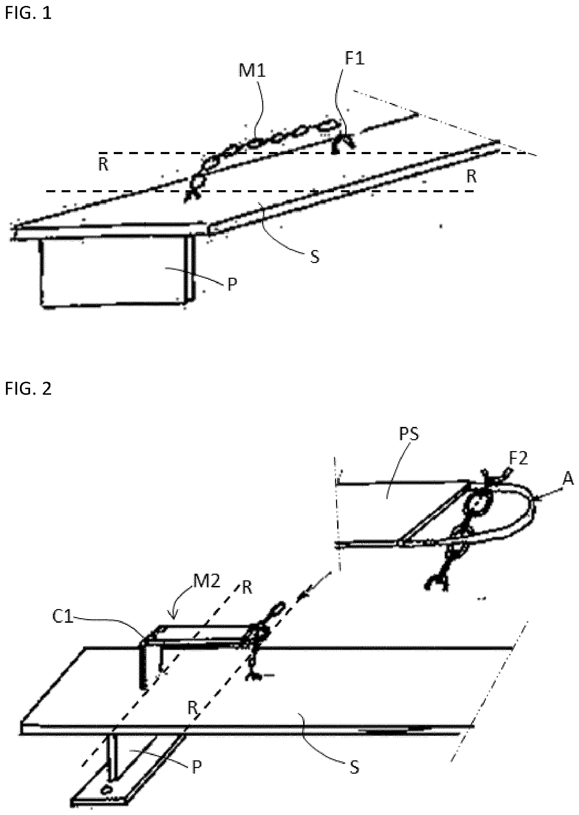

Dans le premier mode de réalisation illustré en figure 1, le mobilier est composé d'une barre formant une plaque support S, sur laquelle est soudée une chaîne servant de premier bras de maintien M1, ou une charnière C1 dans le deuxième mode de réalisation pouvant être illustré par la figure 2.

Un agencement en plaque support S généralement plan permet d'avoir un bon maintien de la partie inférieure de la plaque repose pieds R sur plusieurs points répartis dans l'espace. Il y a donc moins de dommages du dispositif de l'invention dans le cas de véhicules lourds.

Comme on peut le voir sur la figure 1, la plaque support S comporte un anneau F1 de coopérant avec le bras de maintien M1 sous forme de chaîne, et un antivol (non illustré) pour fixer le véhicule.

Une borne de recharge électrique peut être ajoutée au mobilier.

Le système permet le maintien du 2 roues ou de la trottinette sur le support (barre ou plaque support S), et la chaîne ceinture la plateforme pédestre de la trottinette (plaque repose pieds R).

L'extrémité de la chaîne se termine par plusieurs anneaux, qui une fois passés dans la boucle (anneau F1), reçois un cadenas, ou tout autre système anti vol.

Comme on peut le voir sur la figure 2, la charnière C1 peut être sur un deuxième bras de maintien M2 sous forme de plaque PS en deux parties de part et d'autre de la charnière C1, l'une proximale liée à la plaque support S, l'autre distale libre. La partie distale comprend un anneau A (ou possiblement un oeillet non représenté), et reçoit une chaîne F2 pour être en outre fixée au moyen d'un antivol entre l'anneau A et la chaîne F2.

La charnière C1 et le bras de maintien M2 sous forme de plaque PS se terminant par une boucle (anneau A), la chaîne F2 passant par cette boucle A, reçois le système antivol.

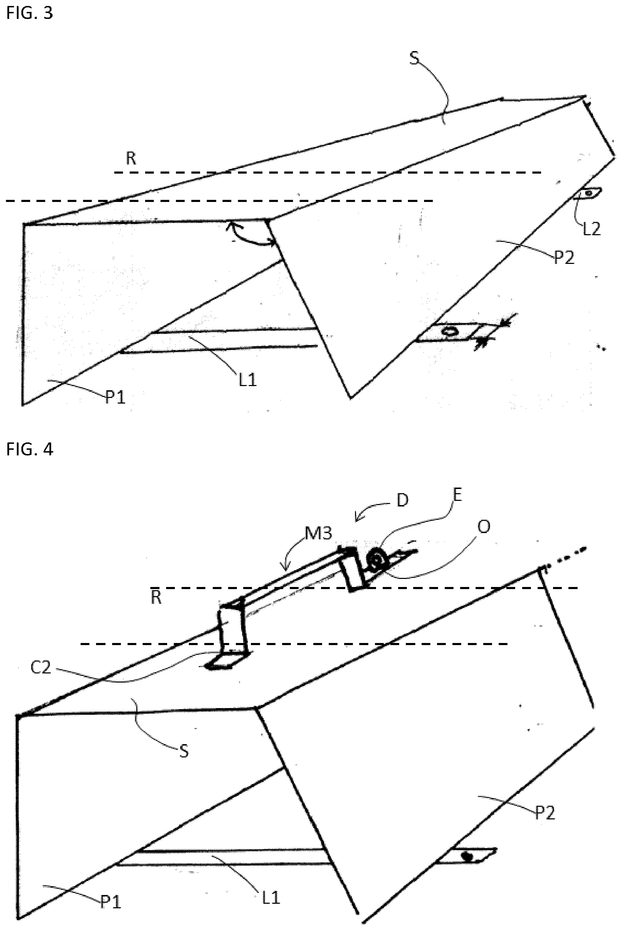

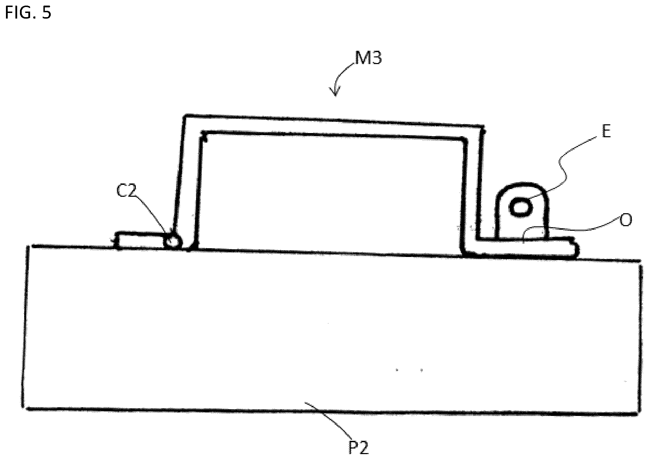

Dans le mode de réalisation des figures 3 à 5, le bras de maintien M3 peut être une barre ou de préférence une plaque emboutie comprenant une charnière C2 d'un côté ; une partie de réception emboutie rectangulaire (ou possiblement carrée) intermédiaire, qui reçoit au moins le dessus (et possiblement un ou les côtés latéraux) de la plaque repose pied R ; et une pièce de fixation de l'autre côté, de préférence sous forme d'un orifice O. L'agencement sous forme de plaque emboutie permet de mieux maintenir la plaque repose pied généralement plane, en comparaison à une barre cylindrique.

Quant à la plaque support S, elle comprend une pièce de fixation complémentaire, de préférence sous forme d'un oeillet E, coopérant avec la première pièce de fixation susvisée.

De préférence, la plaque support S a une forme de profilé creux. Cela permet de gagner en poids. Cette plaque support S peut comprendre un ou deux pieds P1, P2 plans verticaux ou présentant un angle aigu avec la verticale. Cela permet de prévoir une surface de communication sur une face plane, et y afficher un message publicitaire, un slogan, un logo ou une combinaison de ceux-ci.

Les pieds P1, P2 peuvent s'étendre le long d'un axe de pied parallèle à un axe longitudinal de la plaque support S. Cela permet d'avoir une grande dimension de surface de communication.

De préférence, les pieds P1, P2 sont reliés ensemble par au moins une structure de liaison horizontale L1, L2. La structure de liaison L1, L2 comprend de préférence des orifices de fixation. Cela permet de renforcer la tenue mécanique du dispositif, et de préférence l'ancrage du dispositif au sol.

Le dispositif de l'invention peut comporter un ou plusieurs emplacements de stationnement pour véhicules, le long de la plaque support S. Les figures n'illustrent qu'un seul de ces emplacements.

Le dispositif peut mesurer 175 cm de long et 70 cm de large. La hauteur des pieds P1, P2 peut être de préférence de 10 à 11 cm.

Un pied P1, P2 peut présenter un angle de profilé d'environ 120° avec le dessus de la plaque support S.

Le matériau du dispositif de stationnement peut être métallique, par exemple comprenant de l'acier inoxydable ou de l'aluminium ; en matériau plastique rigide ; ou en impression 3D.

## Revendications

1. Dispositif de stationnement pour au moins un véhicule comprenant des roues et une plaque repose pied (R) disposée entre les roues, le dispositif de stationnement comprenant :
- une plaque support (S) configurée pour recevoir la plaque repose pied (R) de sorte que la plaque repose pied (R) repose sur la plaque support (S), en laissant un espace pour les roues de part et d'autre de la plaque support (S) ; et
- un bras de maintien (M1 ; M2 ; M3) configuré pour recouvrir des côtés latéraux et le dessus de la plaque repose pied (R), **caractérisé en ce que** la plaque support (S) et le bras de maintien (M1 ; M2 ; M3) comprennent des pièces de fixation (F1, F2, O, E) coopérant ensemble, et avec un moyen de verrouillage pour verrouiller le bras de maintien (M1 ; M2 ; M3) sur la plaque support (S).

2. Dispositif de stationnement selon la revendication précédente, caractérisé et en ce que le bras de maintien est choisi parmi une chaîne (M1), une plaque à charnière équipée d'un oeillet ou d'un anneau (M2) ; un bras ou une plaque à charnière emboutie de manière rectangulaire ou carrée (M3) équipée d'un oeillet (E) ou d'un anneau.

3. Dispositif de stationnement selon la revendication précédente, **caractérisé en ce que** le bras de maintien (M3) est une plaque emboutie comprenant une charnière (C2) d'un côté, une partie de réception emboutie intermédiaire configurée pour recevoir au moins le dessus de la plaque repose pied (R), et une pièce de fixation de l'autre côté, de préférence un orifice (O), la plaque support (S) comprenant une pièce de fixation complémentaire, de préférence un oeillet (E) ou un anneau.

4. Dispositif de stationnement selon l'une des revendications précédentes, **caractérisé en ce que** la plaque support (S) a une forme de profilé creux.

5. Dispositif de stationnement selon la revendication précédente, **caractérisé en ce que** la plaque support (S) comprend un ou deux pieds (P1, P2) plans verticaux ou présentant un angle aigu avec la verticale.

6. Dispositif de stationnement selon la revendication précédente, **caractérisé en ce que** ledit pied (P1, P2) s'étend le long d'un axe de pied parallèle à un axe longitudinal de la plaque support (S).

7. Dispositif de stationnement selon la revendication 5 ou 6, **caractérisé en ce que** ledit pied (P1, P2) comprend une surface de communication sur une face plane.

8. Dispositif de stationnement selon l'une des revendications 5 à 7, **caractérisé en ce que** lesdits pieds sont reliés ensemble par au moins une structure de liaison horizontale (L1, L2).

9. Dispositif de stationnement selon la revendication précédente, **caractérisé en ce que** ladite structure de liaison horizontale (L1, L2) comprend au moins un point d'ancrage du dispositif de stationnement au sol.
